# EUROPEAN PATENT APPLICATION

(11) **EP 4 712 641 A1**
(43) Date of publication of application: **18.03.2026**
(21) Application number: 23936873.1
(22) Date of filing: 12.05.2023
(51) Int. Cl.: H04W 72/1268

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Hersina, Günter
(86) International application number: PCT/CN2023/094050
(87) International publication number: WO 2024/234182

(57) **Abstract**

Embodiments of the present disclosure provide a method for processing information and apparatus, a communication device, and a storage medium. The method for processing information, executed by a network device, further comprises: sending configuration information, wherein the configuration information is used for a terminal to send uplink (UL) jitter information.

## Description

### FIELD

The present disclosure relates to the field of wireless communication technologies but is not limited to the field of wireless communication technologies, and particularly relates to a method for processing information, an apparatus, a communication device, and a storage medium.

### BACKGROUND

Extended Reality (XR) services are very sensitive to delay, but in some cases, XR services have transmission delay of a single stream, or XR services involve multiple streams scheduled to arrive at a receiving end synchronously, but there is an arrival time difference between the multiple streams. This transmission delay or time difference may be understood as transmission jitter. This transmission jitter may cause the transmission quality of the XR service to fail to achieve the expected or configured Quality of Service (QoS).

### SUMMARY

Embodiments of the present disclosure provide a method for processing information and apparatus, a communication device, and a storage medium.

A first aspect of the embodiments of the present disclosure provides a method for processing information, performed by a network device, where the method includes: sending configuration information, where the configuration information is used for a terminal to send uplink (UL) jitter information.

A second aspect of the embodiments of the present disclosure provides a method for processing information, performed by a terminal, where the method includes: receiving configuration information, where the configuration information is used for a terminal to send uplink (UL) jitter information.

A third aspect of the embodiments of the present disclosure provides an apparatus for processing information, where the apparatus includes:
a sending module, configured to send configuration information, where the configuration information is used for a terminal to send uplink (UL) jitter information.

A fourth aspect of the embodiments of the present disclosure provides an apparatus for processing information, where the apparatus includes:
a receiving module, configured to receive configuration information, where the configuration information is used for a terminal to send uplink (UL) jitter information.

A fifth aspect of the embodiments of the present disclosure provides a communication device, including a processor, a transceiver, a memory, and an executable program stored in the memory and executable by the processor, where when the processor executes the executable program, the method for processing information provided by the aforementioned first aspect or second aspect is performed.

A sixth aspect of the embodiments of the present disclosure provides a computer storage medium, where the computer storage medium stores an executable program; after the executable program is executed by a processor, the method for processing information provided by the aforementioned first aspect or second aspect is implemented.

In the technical solutions provided by the embodiments of the present disclosure, the network device sends configuration information for the terminal to send UL jitter information, so that the terminal can promptly send the UL jitter information according to the configuration information, thereby facilitating the network device to perform resource scheduling and/or QoS parameter configuration according to the UL jitter information, thus improving communication quality.

Regarding the technical solutions provided by the embodiments of the present disclosure, it should be understood that the above general description and the following detailed description are exemplary and explanatory only, and cannot limit the embodiments of the present disclosure.

### BRIEF DESCRIPTION OF THE DRAWINGS

The accompanying drawings herein are incorporated into and constitute a part of this specification, illustrate embodiments consistent with the present disclosure, and are used together with the specification to explain the principles of the embodiments of the present disclosure.
FIG. 1 is a schematic structural diagram of a wireless communication system according to an embodiment;
FIG. 2A is a schematic flowchart of a method for processing information according to an embodiment;
FIG. 2B is a schematic flowchart of a method for processing information according to an embodiment;
FIG. 3A is a schematic flowchart of a method for processing information according to an embodiment;
FIG. 3B is a schematic flowchart of a method for processing information according to an embodiment;
FIG. 4A is a schematic structural diagram of an apparatus for processing information according to an embodiment;
FIG. 4B is a schematic structural diagram of an apparatus for processing information according to an embodiment;
FIG. 5 is a schematic structural diagram of a terminal according to an embodiment; and
FIG. 6 is a schematic structural diagram of a communication device according to an embodiment.

### DETAILED DESCRIPTION

Exemplary embodiments will be described in detail here, examples of which are illustrated in the accompanying drawings. When the following description refers to the drawings, the same numerals in different drawings denote the same or similar elements unless otherwise indicated. The implementations described in the following embodiments do not represent all implementations consistent with the embodiments of the present disclosure. Rather, they are merely examples of apparatuses and methods consistent with some aspects of the embodiments of the present disclosure.

The terms used in the embodiments of the present disclosure are for the purpose of describing particular embodiments only and are not intended to limit the embodiments of the present disclosure. The singular forms "a", "said" and "the" used in the present disclosure are also intended to include plural forms, unless the context clearly indicates otherwise. It should also be understood that the term "and/or" as used herein refers to and includes any and all possible combinations of one or more of the associated listed items.

It should be understood that although the terms first, second, third, etc. may be used in the embodiments of the present disclosure to describe various information, this information should not be limited by these terms. These terms are only used to distinguish information of the same type from one another. For example, without departing from the scope of the embodiments of the present disclosure, first information may also be referred to as second information, and similarly, second information may also be referred to as first information. Depending on the context, the word "if" as used herein may be interpreted as "when" or "upon" or "in response to determining".

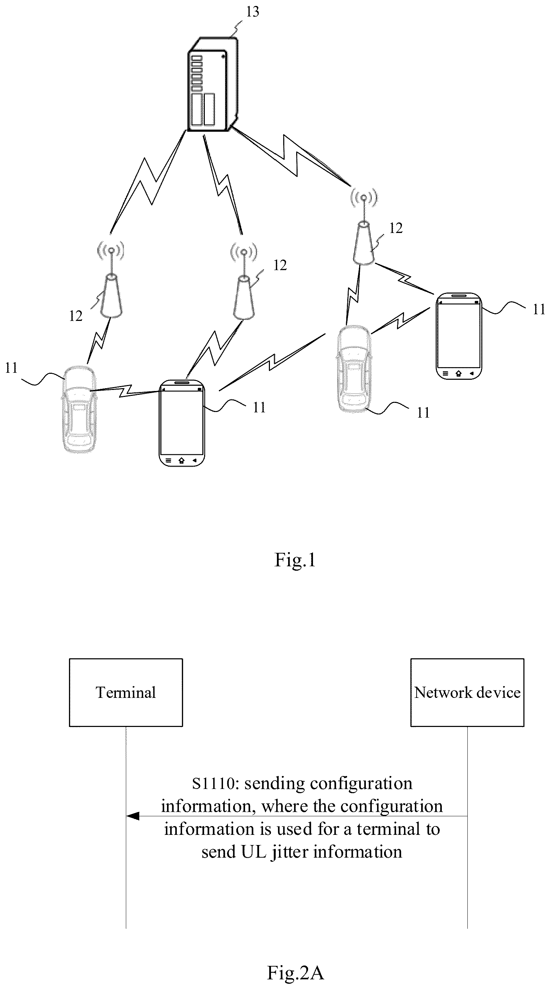

Please refer to FIG. 1, which shows a schematic structural diagram of a wireless communication system provided by an embodiment of the present disclosure. As shown in FIG. 1, the wireless communication system is a communication system based on cellular mobile communication technology, and the wireless communication system may include: several UEs 11, several access devices 12, and several core network devices 13.

The UE 11 may refer to a device that provides voice and/or data connectivity to a user. The UE 11 may communicate with one or more core networks via a Radio Access Network (RAN). The UE 11 may be an Internet of Things UE, such as a sensor device, a mobile phone (or referred to as a "cellular" phone), and a computer having an Internet of Things UE, for example, may be a stationary, portable, pocket-sized, handheld, computer-built-in, or vehicle-mounted device. For example, a Station (STA), a subscriber unit, a subscriber station, a mobile station, a mobile station, a remote station, an access point, a remote terminal, an access terminal, a user terminal, a user agent, a user device, or user equipment (UE). Alternatively, the UE 11 may also be a device of an unmanned aerial vehicle. Alternatively, the UE 11 may also be an onboard device, for example, it may be a driving computer with wireless communication functions, or a wireless communication device connected to a driving computer. Alternatively, the UE 11 may also be a roadside device, for example, it may be a street lamp, traffic light, or other roadside device with wireless communication functions.

The access device 12 may be a network side device in the wireless communication system. The wireless communication system may be a fourth-generation mobile communication technology (4G) system, also known as a Long Term Evolution (LTE) system; or, the wireless communication system may also be a 5G system, also known as a new radio (NR) system or a 5G NR system. Alternatively, the wireless communication system may also be a next-generation system after the 5G system. The access network in the 5G system may be referred to as NG-RAN (New Generation-Radio Access Network), or an MTC system.

The access device 12 may be an evolved Node B (eNB) used in a 4G system. Alternatively, the access device 12 may also be a gNB (gNodeB) using a centralized distributed architecture in a 5G system. When the access device 12 adopts a centralized distributed architecture, it typically includes a central unit (CU) and at least two distributed units (DUs). A Packet Data Convergence Protocol (PDCP) layer, a Radio Link Control (RLC) layer, and a Media Access Control (MAC) layer protocol stack are set in the central unit; a Physical (PHY) layer protocol stack is set in the distributed unit. The specific implementation of the access device 12 is not limited in the embodiments of the present disclosure.

A wireless connection may be established between the access device 12 and the UE 11 via a wireless air interface. In different implementations, the wireless air interface is a wireless air interface based on the fourth-generation mobile communication network technology (4G) standard; or, the wireless air interface is a wireless air interface based on the fifth-generation mobile communication network technology (5G) standard, for example, the wireless air interface is a new radio air interface; or, the wireless air interface may also be a wireless air interface based on the next-generation mobile communication network technology standard beyond 5G.

XR services typically involve data of multiple modalities. These different modalities of data may be generated by different devices. These different modalities of data may be sent by the same terminal or different terminals to the network device, and sent by the network device to the receiving end. Typically, for different modalities of data or different streams of data in XR services, there is a requirement for synchronous arrival. However, transmission jitter at the transmitting end (i.e., uplink jitter) may cause asynchronous transmission of different modalities or different streams of data, thereby leading to asynchronous arrival of data at the receiving end. In view of this, to further improve the communication quality of services such as XR services, in the embodiments of the present disclosure, the network device configures the terminal to send UL jitter information to the network device, facilitating the network device to receive the UL jitter information reported by the terminal. If the network device receives the UL jitter information sent by the terminal, it can perform operations such as resource scheduling or QoS parameter adjustment according to the UL jitter information to ensure the transmission quality of the XR service.

As shown in FIG. 2A, an embodiment of the present disclosure provides a method for processing information, performed by a network device, where the method includes:
S1110: Sending configuration information, where the configuration information is used for a terminal to send UL jitter information.

The network device may include, but is not limited to, an access device.

In some embodiments, the configuration information may be carried by a physical layer message and/or a higher layer message. The physical layer message may include, but is not limited to, Downlink Control Information (DCI). The higher layer message may include, but is not limited to, a Media Access Control (MAC) Control Element (CE), and/or a Radio Resource Control (RRC) message.

The configuration information indicates transmission parameters for the UL jitter information, so that after receiving the configuration information, the terminal sends the UL jitter information according to the transmission parameters.

The configuration information may target UL jitter information for a specific service. For example, the configuration information may target UL jitter information for an XR service.

For example, a terminal may connect to one or more devices via non-cellular communication methods such as WiFi or Bluetooth. When devices need to send UL transmissions to the network device through the same terminal, communication between different devices and the same terminal may experience transmission time differences due to different communication methods or channel differences. For example, the UL transmission may include UL data and/or UL signaling. The UL data may include, but is not limited to, UL data of an XR service. For example, a user's smartwatch and smart glasses are connected to the user's mobile phone via Bluetooth and WiFi Direct respectively. The smartwatch detects the user's heartbeat data, and the smart glasses collect the user's iris data, both of which need to be reported to the network device through the terminal and transmitted to the same service's application server via the network device for multi-factor authentication. At this time, the smart glasses and/or smartwatch are connected to the mobile phone via Bluetooth respectively. Even if the mobile phone is configured by the network device to report these two types of data simultaneously, delay in sending data from one of the smart watch and/or smart glasses may cause the mobile phone to be unable to send these two types of data at the configured reference time, thus causing UL jitter.

The transmission parameters include, but are not limited to, at least one of the following:
resource parameters, time-frequency domain resources for sending the UL jitter information;
transmission mode parameters, indicating the transmission mode of the UL jitter information;
message parameters, indicating the message type and/or message format for sending the UL jitter information;
terminal parameters, indicating the terminal or terminal group for which the UL jitter information is to be sent.

In some embodiments, S1110 may include, but is not limited to, at least one of the following:
broadcasting the configuration information;
multicasting the configuration information to one or more terminal groups; or
sending the configuration information to a single terminal.

In some embodiments, the configuration information may be various types of configurations, specifically including, but not limited to, at least one of the following:
dynamic configuration;
static configuration;
semi-static configuration.

In summary, in the embodiments of the present disclosure, the configuration parameters provided by the configuration information are for the terminal to send UL jitter information. The UL jitter information may be any information indicating UL jitter.

UL jitter may include at least one of the following:
the transmission time of UL data is later than a reference time;
the transmission time of UL data is earlier than a reference time;
the transmission time difference of multiple UL data streams caused by UL jitter.

For example, the reference time may be a configured time for UL data transmission. The configured time can also be understood as an expected time or a scheduled time.

In some embodiments, after receiving the UL jitter information reported by the terminal, the network device can perform UL resource scheduling based on the UL jitter information, compensating for the arrival delay of UL data or the phenomenon of time difference in the arrival of multiple UL data streams caused by UL jitter through UL resource scheduling, thereby improving UL communication quality.

In some embodiments, the configuration information is used for the terminal to send User Assistance Information (UAI) including the UL jitter information.

In the embodiments of the present disclosure, the configuration information indicates that the terminal sends the UL jitter information via UAI.

In this case, the configuration information may be UAI configuration information. The UAI configuration information may include parameters for UAI transmission. The configuration information may include one or more bits explicitly or implicitly indicating whether to send UL jitter information via UAI.

For example, an information field indicating UL jitter information is added to the UAI. As another example, the UAI carries one or more indication bits for indicating UL jitter information.

Reporting UL jitter information through UAI eliminates the need to add new information elements or dedicated messages for reporting UL jitter information, featuring simple implementation and strong compatibility.

In some embodiments, the configuration information is used for the terminal to send UL jitter information of a target QoS flow;
or,
the configuration information is used for the terminal to send UL jitter information associated with a target Radio Bearer (RB).

In some embodiments, there may be one or more target QoS flows, and the UL jitter information may be reported per QoS flow granularity.

In still other embodiments, the target RB may include, but is not limited to, a target Signaling Radio Bearer (SRB) and/or a target Data Radio Bearer (DRB). One DRB may be mapped to one or more target QoS flows.

In the embodiments of the present disclosure, the configuration information is used for the terminal to send UL jitter information of one or more QoS flows mapped by the target RB.

In this case, the configuration information may include: a flow identifier of the QoS flow, QoS parameters, and/or an identifier of the RB, etc. QoS parameters may include, but are not limited to, minimum guaranteed bandwidth, peak rate, and/or tolerable delay value, etc.

In some embodiments, the configuration information may include a list, which may include flow identifiers of QoS flows and/or identifiers of RBs, etc. Thus, through the configuration information, it may be indicated which UL jitter information the terminal should specifically report.

In summary, in the embodiments of the present disclosure, the configuration information also indicates which QoS flows or which RB-related UL jitter information to report, thereby reducing the reporting of UL jitter information for non-target QoS flows.

In some embodiments, the configuration information is used to indicate a parameter value of the UL jitter information sent by the terminal.

The parameter value can also be understood as a reported value.

The parameter value can directly or indirectly indicate information related to UL jitter.

For example, the parameter value includes at least one of the following:
a measured value of UL jitter;
a quantized value of UL jitter;
a first indicator of UL jitter, where the first indicator is used to indicate whether the UL jitter exceeds a predetermined threshold;
a second indicator of UL jitter, where the second indicator is used to indicate the early-late relationship between the transmission time caused by the UL jitter and a reference time.

The measured value may be the actual time value between the actual transmission time of UL data measured by the terminal and the reference time configured for UL data transmission.

To reduce signaling overhead, the measured value may be quantized and the quantized value may be reported.

The quantized value may be an index corresponding to the quantization range in which the measured value falls, or a quantization lower limit or upper limit corresponding to the quantization range, etc.

In some embodiments, the first indicator may include one or more bits, where the two values "0" and "1" of the one or more bits can respectively indicate that the UL jitter is within the predetermined threshold or outside the predetermined threshold.

For example, the predetermined threshold may be indicated by a configuration message or agreed upon by a protocol. For example, the terminal and the network device determine the threshold value according to the service associated with the QoS flow or DRB.

For example, if the predetermined threshold is 3 ms, and the actual transmission time after UL jitter is not more than 3 ms earlier than the reference time configured for sending UL data, and/or the actual transmission time after UL jitter is not more than 3 ms later than the reference time configured for sending UL data, then the first indicator indicates that the UL jitter does not exceed the predetermined threshold; otherwise, the first indicator indicates that the UL jitter exceeds the threshold.

In some embodiments, there may be one or two predetermined thresholds. If there is one predetermined threshold, the threshold value for the actual transmission time being later than the reference time due to UL jitter is the same as the threshold value for the actual transmission delay being earlier than the reference time due to UL jitter. If there are two predetermined thresholds, the threshold value for the actual transmission time being later than the reference time due to UL jitter is different from the threshold value for the actual transmission delay being earlier than the reference time due to UL jitter.

In some embodiments, assuming there are two preset thresholds, and the preset range constituted by these two threshold values is [-X, +Y], if the advance of the transmission time caused by UL jitter is greater than X, it indicates that the UL jitter exceeds the preset threshold, and/or if the delay of the transmission time caused by UL jitter is greater than Y, it also indicates that the UL jitter exceeds the preset threshold. If the advance and/or delay corresponding to the UL jitter is within [-X, +Y], it indicates that the UL jitter does not exceed the preset threshold.

In still other embodiments, assuming there is one preset threshold, and the preset range constituted by this one threshold value is [-X, +X], if the advance of the transmission time caused by UL jitter is greater than X, it indicates that the UL jitter exceeds the preset threshold, and/or if the delay of the transmission time caused by UL jitter is greater than Y, it also indicates that the UL jitter exceeds the preset threshold. If the advance and/or delay corresponding to the UL jitter is within [-X, +Y], it indicates that the UL jitter does not exceed the preset threshold.

In some embodiments, the reference time may be: the transmission time of UL data configured by the network device. The second indicator indicates whether the UL jitter causes the actual transmission time to have an advance or a delay compared to the reference time. If the actual transmission time has an advance, it means that the UL jitter allows the UL data to be sent earlier. If the actual transmission time has a delay, it means that the UL jitter causes the UL data to be sent later.

In some embodiments, the parameter value may further include:
an absolute value of UL jitter. After receiving the absolute value of UL jitter, the network device will consider that the jitter of the terminal is within the interval corresponding to this absolute value.

For example, if there is one absolute value, assuming the absolute value is X, the network device may consider that the UL jitter of the terminal is within [-X, +X].

As another example, there are two absolute values. Assuming these two absolute values are X and Y respectively, the network device will consider that the UE jitter of the terminal is within [-X, +Y].

In some embodiments, the parameter value further includes at least one of the following;
a maximum UL jitter value of a target QoS flow;
an average UL jitter value of a target QoS flow;
a minimum UL jitter value of a target QoS flow;
an instantaneous UL jitter value of a target QoS flow;
a fluctuation range of UL jitter of a target QoS flow.

For example, the maximum UL jitter value, average UL jitter value, minimum UL jitter value, instantaneous UL jitter value, and fluctuation range of the jitter value of the target QoS flow mentioned here can all be reported in the form of measured value, quantized value, first indicator, or second indicator.

For example, if multiple target QoS flows are involved, the maximum UL jitter value, average UL jitter value, minimum UL jitter value, maximum fluctuation range, or minimum fluctuation range among the multiple QoS flows may be reported via measured value, quantized value, first indicator, or second indicator.

In summary, there are various settings for the parameter value, and the specific implementation is not limited to any of the above. The network device can flexibly instruct the terminal to report any of the above through the configuration information as needed.

In some embodiments, the configuration information further includes:
condition information, used for the terminal to determine a trigger condition for sending the UL jitter information;
   and/or,

timer information, used for the terminal to determine a transmission time of the UL jitter information.

In the embodiments of the present disclosure, the condition information contained in the configuration information may be used for the terminal to send the UL jitter information when the trigger condition is met.

The trigger condition may include, but is not limited to, at least one of the following:
the measured value of UL jitter reaches a preset value;
the measured UL jitter values at two adjacent times have changed;
the change amount of UL jitter between two adjacent times reaches a specified value;
the terminal has specified service data to send.

Of course, the above are only examples of trigger conditions, but the specific implementation is not limited to the above examples.

By carrying condition information in the configuration information, frequent reporting of UL jitter information by the terminal may be avoided, and the reporting of UL jitter information by the terminal may be triggered by the trigger condition when the network device needs it.

The timer information may be used to set the minimum time interval between two consecutive reports of UL jitter information by the terminal, thereby reducing frequent reporting of UL jitter information by the terminal.

If the UL jitter information is carried by UAI, the timer may be a prohibit timer for UAI, or a dedicated timer specifically used for reporting UL jitter information using UAI, where this dedicated timer is different from the prohibit timer for UAI.

In some embodiments, the timer information is used for the terminal to start or restart a timer and send the UL jitter information when the timer expires; or, the timer information is further used for the terminal to send the UL jitter information when the terminal detects that the change condition of the UL jitter information between two adjacent times meets the trigger condition and the timer expires; or, the condition information is further used for the terminal to send the UL jitter information when the terminal detects that the UL jitter information at two adjacent times meets the trigger condition.

If UL jitter information is reported via UAI, the timer may be a UAI prohibit timer.

The setting of the timer can prevent the terminal from frequently reporting UL jitter information.

The configuration of the timer information causes the terminal to start the timer after receiving the configuration information. Thus, the terminal sends the UL jitter information only when the timer expires, and does not send the UL jitter information within the timing range of the timer, thereby reducing frequent reporting of UL jitter information.

In some embodiments, the terminal may send the UL jitter information according to transmission parameters determined by protocol agreement. In this way, the network device may be able to receive the UL jitter information sent by the terminal without sending the configuration information.

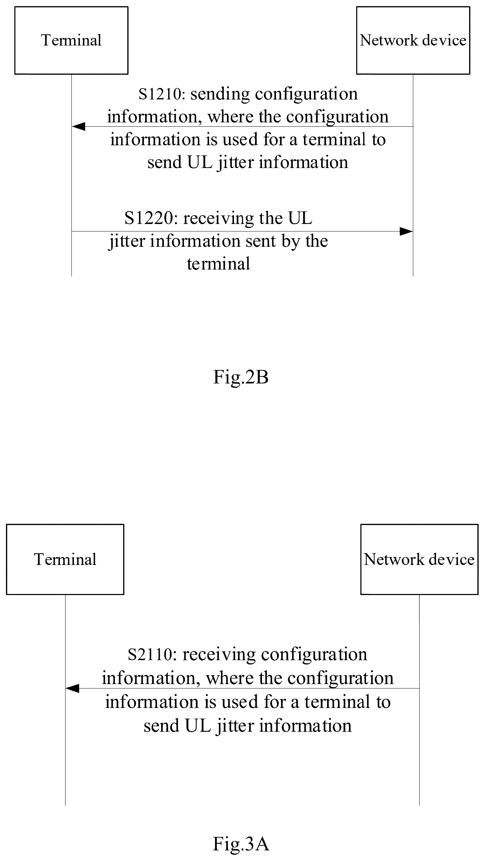

As shown in FIG. 2B, an embodiment of the present disclosure provides a method for processing information, performed by a network device, where the method includes:
S1210: Sending configuration information, where the configuration information is used for a terminal to send UL jitter information.

S1220: Receiving the UL jitter information sent by the terminal.

In the embodiments of the present disclosure, the terminal can send the UL jitter information according to the configuration information.

In some embodiments, S1220 may include: receiving the UL jitter information sent by the terminal according to the configuration information, for example, receiving the UL jitter information sent by the terminal at the corresponding time-frequency resource position according to the time-frequency domain resources limited by the configuration information.

In other embodiments, after receiving the UL jitter information sent by the terminal, the network device may perform UL resource scheduling according to the UL jitter information. In other embodiments, after receiving the UL jitter information, the access network device reports the UL jitter information to the core network device, and the core network device may configure QoS parameters according to the UL jitter information.

In some embodiments, the UL jitter information includes:
a parameter value, used to indicate a UL jitter value and/or a fluctuation range of the UL jitter value;
   and/or,
time information, indicating a time window and/or a period corresponding to the parameter value.

If the parameter value indicates the UL jitter value, the network device can directly perform resource scheduling, etc., based on the UL jitter.

If the parameter value indicates the fluctuation range of the UL jitter value, the network device can determine the current UL jitter value based on the already reported UL jitter values.

When the time information indicates the time window associated with the currently sent UL jitter information, the time information may include start and end time information of the time window, or start time information and a window length, etc.

When the time information indicates the period associated with the currently sent UL jitter information, the period may indicate the duration of the period or an index value corresponding to the period.

For example, if the configuration information indicates the transmission of UL jitter information for multiple QoS flows, the UL jitter information may be sent separately for each QoS flow according to the number of QoS flows, or the maximum UL jitter information, minimum UL jitter information, or UL jitter information representing the average UL jitter value of the multiple QoS flows may be sent for these multiple QoS flows.

In this way, if the network device wishes to receive the specific value of the UL jitter information reported by the terminal, it can configure it through the configuration information as needed.

As shown in FIG. 3A, an embodiment of the present disclosure provides a method for processing information, performed by a terminal, where the method includes:
S2110: Receiving configuration information, where the configuration information is used for a terminal to send UL jitter information.

The terminal may be any terminal shown in FIG. 1.

The terminal may be a mobile phone, a tablet computer, a wearable device, an onboard device, a smart office device, or a smart home device.

The terminal will receive the configuration information from the network device.

In some embodiments, the configuration information may indicate which UL data's UL jitter information the terminal needs to report; and/or the transmission parameters for reporting the UL jitter information.

In some embodiments, the configuration information is used for the terminal to send User Assistance Information (UAI) including the UL jitter information.

If the UL jitter information is carried in the UAI and reported to the network device, the configuration information may be UAI configuration information. After receiving the configuration information, the terminal will know the transmission parameters of the UAI and know that the UL jitter information may be reported to the network device as one type of information carried in the UAI.

For example, a one-bit indication is added to the UAI configuration information, indicating whether the currently configured UAI needs to carry UL jitter information.

For example, an information field indicating UL jitter information is added to the UAI. As another example, the UAI carries one or more indication bits for indicating UL jitter information.

Reporting UL jitter information through UAI eliminates the need to add new information elements or dedicated messages for reporting UL jitter information, featuring simple implementation and strong compatibility.

In some embodiments, the configuration information is used for the terminal to send UL jitter information of a target Quality of Service (QoS) flow;
or,
the configuration information is used for the terminal to send UL jitter information associated with a target Radio Bearer (RB).

In some embodiments, there may be one or more target QoS flows, and the UL jitter information may be reported per QoS flow granularity.

In still other embodiments, the target RB may include, but is not limited to, a target Signaling Radio Bearer (SRB) and/or a target Data Radio Bearer (DRB). One DRB may be mapped to one or more target QoS flows.

In the embodiments of the present disclosure, the configuration information is used for the terminal to send UL jitter information of one or more QoS flows mapped by the target RB.

In this case, the configuration information may include: a flow identifier of the QoS flow, QoS parameters, and/or an identifier of the RB, etc. QoS parameters may include, but are not limited to, minimum guaranteed bandwidth, peak rate, and/or tolerable delay value, etc.

In some embodiments, the configuration information may include a list, which may include flow identifiers of QoS flows and/or identifiers of RBs, etc.

In summary, in the embodiments of the present disclosure, the configuration information also indicates which QoS flows or which RB-related UL jitter information to report, thereby reducing the reporting of UL jitter information for non-target QoS flows.

In some embodiments, the configuration information is used to indicate a parameter value of the UL jitter information sent by the terminal.

In some embodiments, the parameter value includes at least one of the following:
a measured value of UL jitter;
a quantized value of UL jitter;
a first indicator of UL jitter, where the first indicator is used to indicate whether the UL jitter exceeds a predetermined threshold;
a second indicator of UL jitter, where the second indicator is used to indicate whether the UL jitter at the transmission time exceeds the UL jitter at the reference time.

The measured value may be the actual time value between the actual transmission time of UL data measured by the terminal and the reference time configured for UL data transmission.

To reduce signaling overhead, the measured value may be quantized and the quantized value may be reported.

The quantized value may be an index corresponding to the quantization range in which the measured value falls, or a quantization lower limit or upper limit corresponding to the quantization range, etc.

In some embodiments, the first indicator may include one or more bits, where the two values "0" and "1 " of the bits can indicate that the UL jitter is within the predetermined threshold or outside the predetermined threshold.

For example, the predetermined threshold may be indicated by a configuration message or agreed upon by a protocol. For example, the terminal and the network device determine the threshold value according to the service associated with the QoS flow or DRB.

For example, if the predetermined threshold is 3 ms, and the actual transmission time after UL jitter is not more than 3 ms earlier than the reference time configured for sending UL data, and/or the actual transmission time after UL jitter is not more than 3 ms later than the reference time configured for sending UL data, then the first indicator indicates that the UL jitter does not exceed the predetermined threshold; otherwise, the first indicator indicates that the UL jitter exceeds the threshold.

In some embodiments, there may be one or two predetermined thresholds. If there is one predetermined threshold, the threshold value for the actual transmission time being later than the reference time due to UL jitter is the same as the threshold value for the actual transmission delay being earlier than the reference time due to UL jitter. If there are two predetermined thresholds, the threshold value for the actual transmission time being later than the reference time due to UL jitter is different from the threshold value for the actual transmission delay being earlier than the reference time due to UL jitter.

In some embodiments, assuming there are two preset thresholds, and the preset range constituted by these two threshold values is [-X, +Y], if the advance of the transmission time caused by UL jitter is greater than X, it indicates that the UL jitter exceeds the preset threshold, and/or if the delay of the transmission time caused by UL jitter is greater than Y, it also indicates that the UL jitter exceeds the preset threshold. If the advance and/or delay corresponding to the UL jitter is within [-X, +Y], it indicates that the UL jitter does not exceed the preset threshold.

In still other embodiments, assuming there is one preset threshold, and the preset range constituted by this one threshold value is [-X, +X], if the advance of the transmission time caused by UL jitter is greater than X, it indicates that the UL jitter exceeds the preset threshold, and/or if the delay of the transmission time caused by UL jitter is greater than Y, it also indicates that the UL jitter exceeds the preset threshold. If the advance and/or delay corresponding to the UL jitter is within [-X, +Y], it indicates that the UL jitter does not exceed the preset threshold.

In some embodiments, the reference time may be: the transmission time of UL data configured by the network device. The second indicator indicates whether the UL jitter causes the actual transmission time to have an advance or a delay compared to the reference time. If the actual transmission time has an advance, it means that the UL jitter allows the UL data to be sent earlier. If the actual transmission time has a delay, it means that the UL jitter causes the UL data to be sent later.

In some embodiments, the parameter value may also include:
an absolute value of UL jitter. After receiving the absolute value of UL jitter, the network device will consider that the jitter of the terminal is within the interval corresponding to this absolute value.

For example, if there is one absolute value, assuming the absolute value is X, the network device may consider that the UL jitter of the terminal is within [-X, +X].

As another example, there are two absolute values. Assuming these two absolute values are X and Y respectively, the network device will consider that the UE jitter of the terminal is within [-X, +Y].

In some embodiments, the parameter value further includes at least one of the following;
a maximum UL jitter value of a target QoS flow;
an average UL jitter value of a target QoS flow;
a minimum UL jitter value of a target QoS flow;
an instantaneous UL jitter value of a target QoS flow;
a fluctuation range of UL jitter of a target QoS flow.

For example, the maximum UL jitter value, average UL jitter value, minimum UL jitter value, instantaneous UL jitter value, and fluctuation range of the jitter value of the target QoS flow mentioned here can all be reported in the form of measured value, quantized value, first indicator, or second indicator.

For example, if multiple target QoS flows are involved, the maximum UL jitter value, average UL jitter value, minimum UL jitter value, maximum fluctuation range, or minimum fluctuation range among the multiple QoS flows may be reported via measured value, quantized value, first indicator, or second indicator.

In summary, there are various settings for the parameter value, and the specific implementation is not limited to any of the above. The network device can flexibly instruct the terminal to report any one or more of the above parameter values through the configuration information as needed.

In some embodiments, the configuration information further includes:
condition information, used for the terminal to determine a trigger condition for sending the UL jitter information;
   and/or,
timer information, used for the terminal to determine a transmission time of the UL jitter information.

In the embodiments of the present disclosure, the condition information contained in the configuration information may be used for the terminal to send the UL jitter information when the trigger condition is met.

The trigger condition may include, but is not limited to, at least one of the following:
the measured value of UL jitter reaches a preset value;
the change amount of UL jitter between two adjacent times reaches a specified value;
the measured UL jitter values at two adjacent times have changed;
the terminal has specified service data to send.

Of course, the above are only examples of trigger conditions, but the specific implementation is not limited to the above examples.

By carrying condition information in the configuration information, frequent reporting of UL jitter information by the terminal may be avoided, and the reporting of UL jitter information by the terminal may be triggered by the trigger condition when the network device needs it.

The timer information may be used to set the minimum time interval between two consecutive reports of UL jitter information by the terminal, thereby reducing frequent reporting of UL jitter information by the terminal.

If the UL jitter information is carried by UAI, the timer may be a prohibit timer for UAI, or a dedicated timer specifically used for reporting UL jitter information using UAI, where this dedicated timer is different from the prohibit timer for UAI.

In some embodiments, the timer information is used for the terminal to start or restart a timer and send the UL jitter information when the timer expires; or, the timer information is further used for the terminal to send the UL jitter information when the terminal detects that the change condition of the UL jitter information between two adjacent times meets the trigger condition and the timer expires; or, the condition information is further used for the terminal to send the UL jitter information when the terminal detects that the UL jitter information at two adjacent times meets the trigger condition.

If UL jitter information is reported via UAI, the timer may be a UAI prohibit timer.

The setting of the timer can prevent the terminal from frequently reporting UL jitter information.

The configuration of the timer information causes the terminal to start the timer after receiving the configuration information. Thus, the terminal sends the UL jitter information only when the timer expires, and does not send the UL jitter information within the timing range of the timer, thereby reducing frequent reporting of UL jitter information.

In some embodiments, the terminal may send the UL jitter information according to transmission parameters determined by protocol agreement. In this way, the network device may be able to receive the UL jitter information sent by the terminal without sending the configuration information.

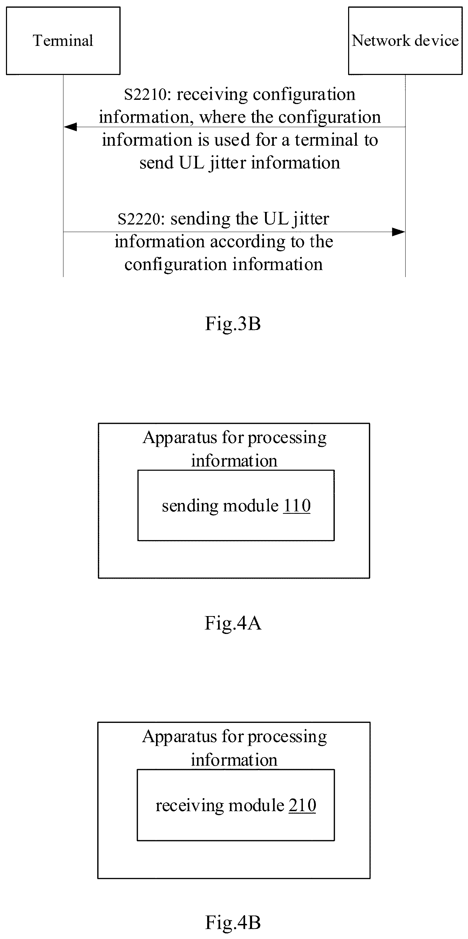

As shown in FIG. 3B, an embodiment of the present disclosure provides a method for processing information, performed by a terminal, where the method includes:
S2210: Receiving configuration information, where the configuration information is used for a terminal to send UL jitter information.

S2220: Sending the UL jitter information according to the configuration information.

After receiving the configuration information, the terminal determines whether it needs to send UL jitter information. If the terminal needs to send UL jitter information to the network device, it needs to send the UL jitter information according to the configuration information. The configuration information indicates sending parameters of the UL jitter information. The sending parameters include but are not limited to at least one of the following:
resource parameters, time-frequency domain resources for sending UL jitter information;
sending method parameters, indicating a sending method of the UL jitter information;
message parameters, indicating a message type and/or message format for sending the UL jitter information;
terminal parameters, indicating a terminal or terminal group for which UL jitter information is to be sent.

For example, sending the UL jitter information according to the configuration information includes:
sending the UL jitter information when a timer started according to the configuration information expires;
In this embodiment, once the timer expires, the terminal sends the UL jitter information once. After sending the UL jitter information, the terminal restarts the timer, thus, the terminal periodically reports the UL jitter information.

In some embodiments, the configuration information may further include a time offset, where the time offset may be used for the terminal to determine a sending time of the first UL jitter information after receiving the configuration information.

For another example, sending the UL jitter information according to the configuration information includes: sending the UL jitter information when it is determined according to the configuration information that a change condition of the UL jitter information at two adjacent times meets a trigger condition.

In the embodiments of the present disclosure, the terminal monitors its own UL jitter to obtain the UL jitter information, and when it detects that the change condition of the UL jitter information between two times meets the trigger condition, it sends the UL jitter information; otherwise, it suspends the sending of the UL jitter information this time.

For example, determining that the change condition of the UL jitter information at two adjacent times meets the trigger condition according to the configuration information may include: when it is determined according to the configuration information that a difference between jitter values indicated by the UL jitter information at two adjacent times is greater than a preset threshold, it indicates that the change condition meets the trigger condition.

In some other embodiments, sending the UL jitter information according to the configuration information includes:
sending the UL jitter information when a timer started according to the configuration information expires and the change condition of the UL jitter information at two adjacent times meets the trigger condition.

In the embodiments of the present disclosure, both the timer expiration and whether the change condition of the UL jitter information at two times meets the trigger condition are combined to determine whether to send the UL jitter information. Thus, the UL jitter information is reported only when the timer expires and the change condition of the UL jitter information triggers the trigger condition, thereby reducing unnecessary reporting.

The embodiments of the present disclosure provide a method for a terminal to report UL jitter information to a base station through UAI, where the UL jitter information may be related to a specific service.

For example, the specific service is an XR service; the network device configures the terminal to report UL jitter information assistance information through UAI via an RRC message.

The configuration granularity may be LCG granularity, QoS flow granularity, or DRB granularity. That is, the configuration granularity of the UL jitter information: it may be a target QoS flow for which the UE is configured with UL jitter information. That is, not all QoS flows have UL jitter information or need to report UL jitter information.

As one embodiment, a list of target QoS flow measurement results may be configured.

As one embodiment, a DRB for which the UE measures UL jitter may be indicated, where the terminal treats uplink QoS flows mapped to this DRB as target QoS flows that need to be measured. At this time, the terminal may treat at least one QoS flow mapped to this DRB as a target QoS flow.

Optionally, the terminal may integrate measurement results of at least one target QoS flow mapped to this DRB and then report one measurement result. This measurement result is one of the information contents of the aforementioned UL jitter information. For example, integrating the results of the target QoS flows, such as taking an average value, or taking a minimum value, a maximum value, etc.

The UAI reporting may be for at least one target QoS flow list; that is, when reporting, at least one information field is carried, where the information field may be a first information field, for example, the first information field corresponds to the measurement result report of UL jitter for target QoS flow 1, and the second information field corresponds to the measurement result report of UL jitter for target QoS flow 2.

The reported value may be as follows:
It may report a positive value and/or a negative value, respectively corresponding to later than a reference time point; or earlier than a reference time point;
-X, +Y, indicating that the UL jitter value is within [-X, +Y];
X, indicating that the UL jitter value is within [-X, +X].

The UL jitter value may be quantized according to a numerical range and then reported.

For example, after the measured value is quantized, a numerical index is reported.

The terminal may also directly report an indication of whether the UL jitter information exceeds a predetermined threshold.

That is, a flag bit is used to indicate whether the threshold is exceeded or not.

The network device defines, by agreed rules, when the terminal performs UAI reporting including UL jitter information.

Optional embodiment A: performing the first UL jitter information reporting after configuration.

Optional embodiment B: reporting when the reported value of any target QoS flow or the reported value of a target DRB changes compared to the last report, or, report when the reported value of any target QoS flow or the reported value of a target DRB changes beyond a threshold compared to the last reported value.

Optional embodiment C: a prohibit timer may be added, that is, after reporting, the prohibit timer is run, and reporting may be performed again only after the prohibit timer expires.

Optional embodiments A to C may be combined for implementation. For example, optional embodiment A and optional embodiment B are combined for implementation; optional embodiment A and optional embodiment C are combined for implementation. Another example, first execute optional embodiment A, and each time the prohibit timer expires, determine whether the reported value of any target QoS flow or the reported value of a target DRB has changed compared to the last report, and if so, perform UL jitter information reporting; if there is no change, then do not report when the corresponding prohibit timer expires. After determining whether to report or not, restart the prohibit timer.

As one embodiment, when the network device configures the terminal to report UL jitter information through UAI via an RRC message, it may optionally carry a period corresponding to the QoS flow, to facilitate the terminal to perform measurement.

The following embodiments are provided:
UL jitter information is sent to the network device using quantized values, and a mapping relationship between measured values and reported values of UL jitter is as shown in the following table:

| Reported Value | Measured Value | Unit |
|---|---|---|
| Codepoint 0 | 0 < UL jitter value ≤ 0.5 ms | ms |
| Codepoint 1 | 0.5 < UL jitter value ≤ 1.5 ms | ms |
| Codepoint 2 | 1.5 < UL jitter value ≤ 2.5 ms | ms |

As shown in FIG. 4A, an embodiment of the present disclosure provides an apparatus for processing information, where the apparatus further includes:
a sending module 110, configured to send configuration information, where the configuration information is used for a terminal to send uplink (UL) jitter information.

In some embodiments, the information processing apparatus may be the aforementioned network device. The network device may further include a processing module, where the processing module is connected to the sending module 110 and may be configured to at least generate the configuration information.

In some other embodiments, the information processing apparatus may further include a storage module, where the storage module may be connected to the sending module 110 and/or the processing module, and may be configured to at least store the configuration information.

It may be understood that the configuration information is used for the terminal to send user assistance information (UAI) including the UL jitter information.

It may be understood that the configuration information is used for the terminal to send UL jitter information of a target quality of service (QoS) flow;
or,
the configuration information is used for the terminal to send UL jitter information associated with a target radio bearer (RB).

It may be understood that the configuration information is used to indicate a parameter value of the UL jitter information sent by the terminal.

It may be understood that the parameter value includes at least one of:
a measured value of a UL jitter;
a quantized value of a UL jitter;
a first indicator of a UL jitter, where the first indicator is used to indicate whether the UL jitter exceeds a predetermined threshold;
a second indicator of a ULjitter, where the second indicator is used to indicate a comparison between a sending time caused by the UL jitter and a reference time.

It may be understood that the parameter value further includes at least one of;
a maximum UL jitter value of a target QoS flow;
an average UL jitter value of a target QoS flow;
a minimum UL jitter value of a target QoS flow;
an instantaneous UL jitter value of a target QoS flow;
a fluctuation range of a UL jitter of a target QoS flow.

It may be understood that the configuration information further includes:
condition information used for the terminal to determine a trigger condition for sending the UL jitter information;
   and/or,
timer information used for the terminal to determine a sending time of the UL jitter information.

It may be understood that the timer information is used for the terminal to start or restart a timer and send the UL jitter information in a case where the timer expires;
or,
the timer information is further used for the terminal to send the UL jitter information in a case where the terminal detects that a change of the UL jitter information between two adjacent times meets the trigger condition and a timer expires;
   or,
the condition information is further used for the terminal to send the UL jitter information in a case where the terminal detects that a change of the UL jitter information between two adjacent times meets the trigger condition.

It may be understood that the apparatus further includes:
a receiving module, configured to receive the UL jitter information sent by the terminal.

It may be understood that the UL jitter information includes:
a parameter value used to indicate a UL jitter value and/or a fluctuation range of the UL jitter value;
   and/or,
time information used to indicate a time window and/or a period corresponding to a parameter value.

It may be understood that the receiving module is configured to receive UAI including the UL jitter information.

As shown in FIG. 4B, an embodiment of the present disclosure provides an apparatus for processing information, where the apparatus includes:
a receiving module 210, configured to receive configuration information, where the configuration information is used for a terminal to send uplink (UL) jitter information.

The information processing apparatus may be a terminal. The terminal may include a storage module, where the storage module may be connected to the receiving module 210 and may at least be used to store the configuration information.

It may be understood that the configuration information is used for the terminal to send user assistance information (UAI) including the UL jitter information.

It may be understood that the configuration information is used for the terminal to send UL jitter information of a target quality of service (QoS) flow;
or,
the configuration information is used for the terminal to send UL jitter information associated with a target radio bearer (RB).

It may be understood that the configuration information is used to indicate a parameter value of the UL jitter information sent by the terminal.

It may be understood that the parameter value includes at least one of:
a measured value of a UL jitter;
a quantized value of a UL jitter;
a first indicator of a UL jitter, where the first indicator is used to indicate whether the UL jitter exceeds a predetermined threshold;
a second indicator of a UL jitter, where the second indicator is used to indicate a comparison between a sending time caused by the UL jitter and a reference time.

It may be understood that the parameter value further includes at least one of;
a maximum UL jitter value of a target QoS flow;
an average UL jitter value of a target QoS flow;
a minimum UL jitter value of a target QoS flow;
an instantaneous UL jitter value of a target QoS flow;
a fluctuation range of a UL jitter of a target QoS flow.

It may be understood that the configuration information further includes:
condition information used for the terminal to determine a trigger condition for sending the UL jitter information;
   and/or,
timer information used for the terminal to determine a sending time of the UL jitter information.

It may be understood that the timer information is used for the terminal to start or restart a timer and send the UL jitter information in a case where the timer expires;
or,
the timer information is further used for the terminal to send the UL jitter information in a case where the terminal detects that a change of the UL jitter information between two adjacent times meets the trigger condition and a timer expires;
   or,
the condition information is further used for the terminal to send the UL jitter information in a case where the terminal detects that a change of the UL jitter information between two adjacent times meets the trigger condition.

It may be understood that the apparatus further includes:
a sending module, configured to send the UL jitter information according to the configuration information.

It may be understood that the sending module is configured to perform at least one of:
sending the UL jitter information in a case where a timer started according to the configuration information expires;
sending the UL jitter information in response to determining that a change of the UL jitter information between two adjacent times meets the trigger condition according to the configuration information;
sending the UL jitter information in a case where a timer started according to the configuration information expires and a change of the UL jitter information between two adjacent times meets the trigger condition.

An embodiment of the present disclosure provides a communication device, including:
a memory for storing processor-executable instructions;
a processor, connected to the memory;
where the processor is configured to execute the strategy processing method provided by any of the foregoing technical solutions.

The processor may include various types of storage media, where the storage medium is a non-transitory computer storage medium, which can continue to store information thereon after the communication device is powered off.

Here, the communication device includes: a UE or a network element, where the network element may be any one of the first to fourth network elements mentioned above.

The processor may be connected to the memory via a bus or the like, and is configured to read the executable program stored in the memory, for example, to perform at least one of the methods shown in FIG. 2A to FIG. 2B or FIG. 3A to FIG. 3B.

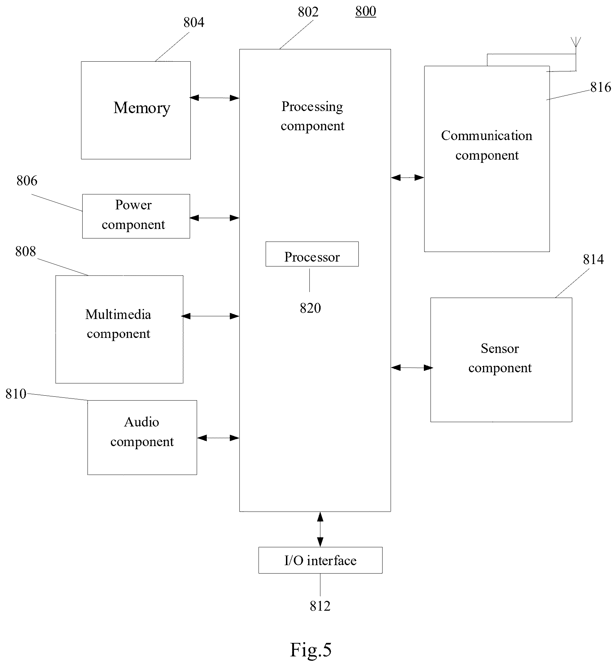

FIG. 5 is a block diagram of a terminal 800 according to an exemplary embodiment. For example, the terminal 800 may be a mobile phone, a computer, a digital broadcast user equipment, a messaging device, a game console, a tablet device, a medical device, a fitness device, a personal digital assistant, etc.

Referring to FIG. 5, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as operations associated with display, telephone calls, data communications, camera operations, and recording operations. The processing component 802 may include one or more processors 820 to execute instructions to perform all or part of the steps of the methods described above. Additionally, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations in the terminal 800. Examples of such data include instructions for any application or method operating on the terminal 800, contact data, phonebook data, messages, pictures, videos, etc. The memory 804 may be implemented by any type of volatile or non-volatile memory device or combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to various components of the terminal 800. The power component 806 may include a power management system, one or more power sources, and other components associated with generating, managing, and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensors may not only sense the boundary of a touch or slide action but also detect the duration and pressure associated with the touch or slide operation. In some embodiments, the multimedia component 808 includes a front camera and/or a rear camera. When the terminal 800 is in an operation mode, such as a shooting mode or a video mode, the front camera and/or the rear camera may receive external multimedia data. Each front camera and rear camera may be a fixed optical lens system or have focal length and optical zoom capability.

The audio component 810 is configured to output and/or input audio signals. For example, the audio component 810 includes a microphone (MIC), and when the terminal 800 is in an operation mode, such as a call mode, a recording mode, and a voice recognition mode, the microphone is configured to receive external audio signals. The received audio signals may be further stored in the memory 804 or transmitted via the communication component 816. In some embodiments, the audio component 810 further includes a speaker for outputting audio signals.

The I/O interface 812 provides an interface between the processing component 802 and peripheral interface modules, where the peripheral interface modules may be a keyboard, a click wheel, buttons, etc. These buttons may include, but are not limited to: a home button, a volume button, a start button, and a lock button.

The sensor component 814 includes one or more sensors to provide status assessments of various aspects of the terminal 800. For example, the sensor component 814 may detect an open/closed state of the terminal 800, relative positioning of components, such as the display and keypad of the terminal 800, and the sensor component 814 may also detect a change in position of the terminal 800 or a component of the terminal 800, the presence or absence of user contact with the terminal 800, orientation or acceleration/deceleration of the terminal 800, and temperature changes of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as WiFi, 2G, or 3G, or a combination thereof. In one exemplary embodiment, the communication component 816 receives broadcast signals or broadcast associated information from an external broadcast management system via a broadcast channel. In one exemplary embodiment, the communication component 816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an exemplary embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, for executing the above methods.

In an exemplary embodiment, there is also provided a non-transitory computer-readable storage medium including instructions, such as the memory 804 including instructions, where the instructions are executable by the processor 820 of the terminal 800 to perform the above methods. For example, the non-transitory computer-readable storage medium may be ROM, random access memory (RAM), CD-ROM, magnetic tape, floppy disk, optical data storage device, etc.

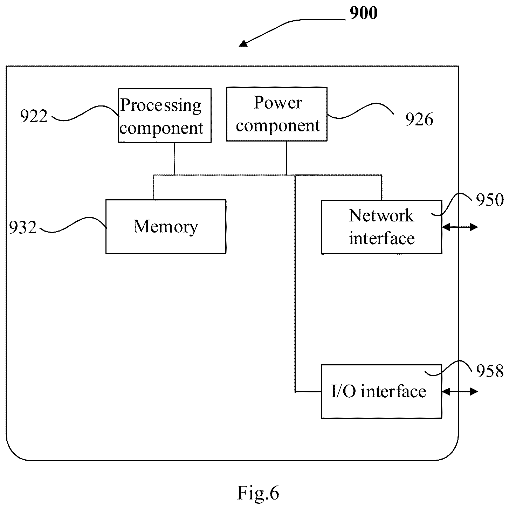

As shown in FIG. 6, an embodiment of the present disclosure shows a structure of a network device. For example, the network device 900 may be provided as an access network device.

Referring to FIG. 6, the network device 900 includes a processing component 922, which further includes one or more processors, and memory resources represented by a memory 932, for storing instructions executable by the processing component 922, such as applications. The applications stored in the memory 932 may include one or more modules, each corresponding to a set of instructions. Moreover, the processing component 922 is configured to execute the instructions to perform any method applied to the access device described above, for example, at least one of the methods shown in FIG. 2A to FIG. 2B or FIG. 3A to FIG. 3B.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™}, or the like.

In the absence of contradictions, each step in one implementation or embodiment may be implemented as an independent embodiment, and the steps may be arbitrarily combined. For example, a solution after removing some steps in one implementation or embodiment may also be implemented as an independent embodiment, and the order of the steps in one implementation or embodiment may be arbitrarily exchanged. Additionally, optional methods or examples in one implementation or embodiment may be arbitrarily combined; furthermore, different implementations or embodiments may be arbitrarily combined. For example, part or all of the steps of different implementations or embodiments may be arbitrarily combined, and one implementation or embodiment may be arbitrarily combined with optional methods or examples of other implementations or embodiments.

Those skilled in the art, after considering the specification and practicing the invention disclosed herein, will readily conceive of other implementations of the embodiments of the present disclosure. The present disclosure is intended to cover any variations, uses, or adaptive changes of the embodiments of the present disclosure, which follow the general principles of the embodiments of the present disclosure and include common general knowledge or conventional technical means in the art not disclosed in the present disclosure. The specification and examples are to be regarded as exemplary only, and the true scope and spirit of the embodiments of the present disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. A method for processing information, performed by a network device, comprising:
sending configuration information, wherein the configuration information is used for a terminal to send uplink (UL) jitter information.

2. The method according to claim 1, wherein the configuration information is used for the terminal to send user assistance information (UAI) comprising the UL jitter information.

3. The method according to claim 1 or 2, wherein
the configuration information is used for the terminal to send UL jitter information of a target quality of service (QoS) flow; or
the configuration information is used for the terminal to send UL jitter information associated with a target radio bearer (RB).

4. The method according to any one of claims 1 to 3, wherein the configuration information is used to indicate a parameter value of the UL jitter information sent by the terminal.

5. The method according to claim 4, wherein the parameter value comprises at least one of:
a measured value of a UL jitter;
a quantized value of a UL jitter;
a first indicator of a UL jitter, wherein the first indicator is used to indicate whether the UL jitter exceeds a predetermined threshold; or
a second indicator of a UL jitter, wherein the second indicator is used to indicate a comparison between a sending time caused by the UL jitter and a reference time.

6. The method according to any one of claims 1 to 5, wherein the parameter value further comprises at least one of:
a maximum UL jitter value of a target QoS flow;
an average UL jitter value of a target QoS flow;
a minimum UL jitter value of a target QoS flow;
an instantaneous UL jitter value of a target QoS flow; or
a fluctuation range of a UL jitter of a target QoS flow.

7. The method according to any one of claims 1 to 6, wherein the configuration information further comprises:
condition information used for the terminal to determine a trigger condition for sending the UL jitter information; and/or
timer information used for the terminal to determine a sending time of the UL jitter information.

8. The method according to claim 7, wherein
the timer information is further used for the terminal to start or restart a timer and send the UL jitter information in a case where the timer expires; or
the timer information is further used for the terminal to send the UL jitter information in a case where the terminal detects that a change of the UL jitter information between two adjacent times meets the trigger condition and a timer expires; or
the condition information is further used for the terminal to send the UL jitter information in a case where the terminal detects that a change of the UL jitter information between two adjacent times meets the trigger condition.

9. The method according to claim 7, further comprising:
receiving the UL jitter information sent by the terminal.

10. The method according to claim 9, wherein the UL jitter information comprises:
a parameter value used to indicate a UL jitter value and/or a fluctuation range of the UL jitter value; and/or
time information used to indicate a time window and/or a period corresponding to a parameter value.

11. The method according to any one of claims 1 to 9, wherein receiving the UL jitter information sent by the terminal further comprises:
receiving UAI comprising the UL jitter information.

12. A method for processing information, performed by a terminal, comprising:
receiving configuration information, wherein the configuration information is used for a terminal to send uplink (UL) jitter information.

13. The method according to claim 12, wherein the configuration information is used for the terminal to send user assistance information (UAI) comprising the UL jitter information.

14. The method according to claim 12 or 13, wherein
the configuration information is used for the terminal to send UL jitter information of a target quality of service (QoS) flow; or
the configuration information is used for the terminal to send UL jitter information associated with a target radio bearer (RB).

15. The method according to any one of claims 12 to 14, wherein the configuration information is used to indicate a parameter value of the UL jitter information sent by the terminal.

16. The method according to claim 15, wherein the parameter value comprises at least one of:
a measured value of a UL jitter;
a quantized value of a UL jitter;
a first indicator of a UL jitter, wherein the first indicator is used to indicate whether the UL jitter exceeds a predetermined threshold; or
a second indicator of a UL jitter, wherein the second indicator is used to indicate a comparison between a sending time caused by the UL jitter and a reference time.

17. The method according to any one of claims 12 to 16, wherein the parameter value further comprises at least one of:
a maximum UL jitter value of a target QoS flow;
an average UL jitter value of a target QoS flow;
a minimum UL jitter value of a target QoS flow;
an instantaneous UL jitter value of a target QoS flow; or
a fluctuation range of a UL jitter of a target QoS flow.

18. The method according to any one of claims 12 to 17, wherein the configuration information further comprises:
condition information used for the terminal to determine a trigger condition for sending the UL jitter information; and/or
timer information used for the terminal to determine a sending time of the UL jitter information.

19. The method according to claim 18, wherein
the timer information is further used for the terminal to start or restart a timer and send the UL jitter information in a case where the timer expires; or
the timer information is further used for the terminal to send the UL jitter information in a case where the terminal detects that a change of the UL jitter information between two adjacent times meets the trigger condition and a timer expires; or
the condition information is further used for the terminal to send the UL jitter information in a case where the terminal detects that a change of the UL jitter information at two adjacent times meets the trigger condition.

20. The method according to any one of claims 12 to 19, further comprising:
sending the UL jitter information according to the configuration information.

21. The method according to claim 20, wherein sending the UL jitter information according to the configuration information comprises at least one of:
sending the UL jitter information in a case where a timer started according to the configuration information expires;
sending the UL jitter information in response to determining that a change of the UL jitter information between two adjacent times meets the trigger condition according to the configuration information; or
sending the UL jitter information in a case where a timer started according to the configuration information expires and a change of the UL jitter information between two adjacent times meets the trigger condition.

22. An apparatus for processing information, comprising:
a sending module configured to send configuration information, wherein the configuration information is used for a terminal to send uplink (UL) jitter information.

23. An apparatus for processing information, comprising:
a receiving module configured to receive configuration information, wherein the configuration information is used for a terminal to send uplink (UL) jitter information.

24. A communication device, comprising a processor, a transceiver, a memory, and an executable program stored in the memory and executable by the processor, wherein the processor, when executing the executable program, performs the method for processing information according to any one of claims 1 to 11 or 12 to 21.

25. A computer storage medium, having stored therein an executable program that, when executed, causes the method for processing information according to any one of claims 1 to 11 or 12 to 21 to be implemented.
